# EUROPÄISCHE PATENTANMELDUNG

(11) **EP 2 641 802 A2**
(43) Veröffentlichungstag der Anmeldung: **25.09.2013**
(21) Anmeldenummer: 13154395.1
(22) Anmeldetag: 07.02.2013
(51) Int. Cl.: B60W 20/00, B60W 30/18, B60W 50/14, B60K 6/48, B60W 10/11

(54) **Verfahren zum Betreiben eines Antriebsstrangs eines Fahrzeugs mit Parallel-Hybrid-Antrieb**

(30) Priorität: 23.03.2012 DE 102012204719
(71) Anmelder: ZF Friedrichshafen AG, 88038 Friedrichshafen (DE)
(72) Erfinder: Baur, Simon, 88099 Neukirch (DE); Kneer, Reiner, 88149 Nonnenhorn (DE)

(57) **Zusammenfassung**

Die Erfindung betrifft ein Verfahren zum Betreiben eines Antriebsstrangs eines Fahrzeugs mit Parallel-Hybrid-Antrieb, wobei der Antriebsstrang ein Antriebsaggregat mit einem Verbrennungsmotor (2) und einer elektrischen Maschine (4), eine zwischen Verbrennungsmotor (2) und elektrischer Maschine (4) geschaltete Kupplung (3) sowie ein automatisches Schaltgetriebe (5) umfasst, welches zwischen dem Antriebsaggregat und einem Abtrieb (6) angeordnet ist. In dem erfindungsgemäßen Verfahren ist eine Start/Stopp-Funktion vorgesehen, durch welche bei Vorliegen einer oder mehrerer vorbestimmter Bedingungen der Verbrennungsmotor (2) bei Stillstand des Fahrzeugs abgeschaltet und ein eingelegter Gang im Schaltgetriebe (5) ausgelegt wird. Das erfindungsgemäße Verfahren zeichnet sich dadurch aus, dass bei über die Start/Stopp-Funktion abgeschaltetem Verbrennungsmotor (2) eine Benutzerschnittstelle überwacht wird, über welche der Fahrer des Fahrzeugs einen zukünftigen Gang des Schaltgetriebes (5) anwählen kann, wobei ein über die Benutzerschnittstelle angewählter Gang nach Beendigung der Start/Stopp-Funktion im Schaltgetriebe (5) eingelegt wird.

## Beschreibung

Die Erfindung betrifft ein Verfahren zum Betreiben eines Antriebsstrangs eines Fahrzeugs mit Parallel-Hybrid-Antrieb.

Die Hauptkomponenten eines Antriebsstrangs eines Fahrzeugs mit Hybridantrieb sind ein Antriebsaggregat mit einem Verbrennungsmotor und einer elektrischen Maschine sowie ein Getriebe. Das Getriebe wandelt Drehmomente und Drehzahlen und setzt so das Zugkraftangebot des Antriebsaggregats um.

Bei einem Antriebsstrang eines Fahrzeugs mit einem sog. Parallel-Hybrid-Antrieb können Verbrennungsmotor und elektrische Maschine gemeinsam auf den Antriebsstrang wirken. Dabei ist zwischen dem Verbrennungsmotor und der elektrischen Maschine eine Kupplung geschaltet, über die der Verbrennungsmotor vom Antriebsstrang abgekoppelt werden kann. Zur Einsparung von Kraftstoff ist es aus dem Stand der Technik bekannt, eine sog. Start/Stopp-Funktion in einem Parallel-Hybrid-Antriebsstrang zu implementieren. Dabei wird bei Vorliegen einer oder mehrerer vorbestimmter Bedingungen bei Stillstand des Fahrzeugs der Verbrennungsmotor abgeschaltet. Bei Fortsetzung der Fahrt wird das Anlassen des Verbrennungsmotors in der Regel über die elektrische Maschine des Antriebsstrangs bewirkt, wofür die Kupplung zwischen Verbrennungsmotor und elektrischer Maschine geschlossen wird.

Wird die oben beschriebene Start/Stopp-Funktionalität in einem Fahrzeug mit automatischem Schaltgetriebe verwendet, wird beim Abschalten des Verbrennungsmotors mittels der Start/Stopp-Funktion der Gang aus dem Getriebe ausgelegt, d.h. das Schaltgetriebe wird in den Zustand "Neutral" versetzt. Hierdurch wird erreicht, dass der Verbrennungsmotor über die elektrische Maschine wieder angelassen werden kann, denn zwischen elektrischer Maschine und Schaltgetriebe ist üblicherweise keine Kupplung vorgesehen, so dass ein Anlassen des Verbrennungsmotors mit eingelegtem Gang zu einem unerwünschten Anfahren des Fahrzeugs führen würde.

Im Betrieb des Antriebsstrangs eines Fahrzeugs mit Parallel-Hybrid-Antrieb und automatischem Schaltgetriebe hat der Fahrer derzeit keine Möglichkeit, während der über die Start/Stopp-Funktion bewirkten Abschaltung des Motors Einfluss auf den Getriebezustand zu nehmen. Vielmehr muss der Fahrer warten, bis die Start/Stopp-Funktion durch Anlassen des Verbrennungsmotors beendet wird.

Aufgabe der Erfindung ist es deshalb, die Start/Stopp-Funktion in einem Verfahren zum Betreiben eines Antriebsstrangs eines Fahrzeugs mit Parallel-Hybrid-Antrieb zu verbessern.

Diese Aufgabe wird durch das Verfahren gemäß Patentanspruch 1 bzw. die Vorrichtung gemäß Patentanspruch 8 gelöst. Weiterbildungen der Erfindung sind in den abhängigen Ansprüchen definiert.

Das erfindungsgemäße Verfahren dient zum Betreiben eines Antriebsstrangs eines Fahrzeugs mit Parallel-Hybrid-Antrieb, insbesondere eines Kraftfahrzeugs und vorzugsweise eines Nutzfahrzeugs, wie z.B. eines LKWs oder eines Fahrzeugs zur Personenbeförderung. Der Antriebsstrang umfasst in an sich bekannter Weise ein Antriebsaggregat mit einem Verbrennungsmotor und einer elektrischen Maschine, eine zwischen Verbrennungsmotor und elektrischer Maschine geschaltete Kupplung sowie ein Getriebe. Zwischen Antriebsaggregat und Getriebe ist in einer bevorzugten Ausführungsform eine Verbindung ohne Kupplung vorgesehen. Das Getriebe ist ein automatisches Schaltgetriebe, welches zwischen dem Antriebsaggregat und einem Abtrieb angeordnet ist. In dem Verfahren ist ferner eine Start/Stopp-Funktion realisiert, durch welche bei Vorliegen einer oder mehrerer vorbestimmter Bedingungen der Verbrennungsmotor bei Stillstand des Fahrzeugs abgeschaltet und ein eingelegter Gang im automatischen Schaltgetriebe ausgelegt wird. Vorzugsweise wird beim Abschalten des Verbrennungsmotors über die Start/Stopp-Funktion auch die Kupplung zwischen Verbrennungsmotor und elektrischer Maschine geöffnet.

Erfindungsgemäß wird bei über die Start/Stopp-Funktion abgeschaltetem Verbrennungsmotor eine Benutzerschnittstelle überwacht, über welche der Fahrer des Fahrzeugs einen zukünftigen Gang des Schaltgetriebes anwählen kann, wobei ein über die Benutzerschnittstelle angewählter Gang nach Beendigung der Start/Stopp-Funktion im Schaltgetriebe eingelegt wird. Das heißt, es werden Eingaben an der Benutzerschnittstelle erfasst, welche einer Anwahl eines zukünftigen Gangs entsprechen. Als Folge wird ein über die Benutzerschnittstelle angewählter Gang nach Beendigung der Start/Stopp-Funktion im Schaltgetriebe eingelegt. Auf diese Weise wird dem Fahrer die Möglichkeit gegeben, bereits vorab bei noch abgeschaltetem Verbrennungsmotor den von ihm bei der Wiederanfahrt gewünschten Gang auszuwählen.

Insbesondere kann der Fahrer bei abgeschaltetem Verbrennungsmotor geeignete Ganganforderungen zum Wechsel des zum Anfahren zu verwendenden Gangs vornehmen. Vorzugsweise kann er dabei zwischen Vorwärtsgang (Getriebestellung D) und Rückwärtsgang (Getriebestellung R) wechseln oder andere Gangkorrekturen in Richtung zu höheren oder niedrigeren Gängen für Vorwärtsgänge oder Rückwärtsgänge vornehmen. Ebenso kann der Fahrer ggf. einen Wechsel zwischen Vorwärtsgang und Rückwärtsgang mit entsprechenden Anfahrkorrekturen kombinieren. Vorzugsweise kann über die Benutzerschnittstelle ferner die Gangstellung "ausgelegter Gang" (d.h. die Neutral-Stellung) angewählt werden, wobei bei dieser Anwahl das Schaltgetriebe bei Beendigung der Start/Stopp-Funktion in der ausgelegten Gangstellung verbleibt.

Im erfindungsgemäßen Verfahren kann ggf. auch überprüft werden, ob der über die Benutzerschnittstelle angewählte Gang zulässig ist, wobei nur ein zulässiger angewählter Gang beim Wiederanfahren des Fahrzeugs nach Beendigung der Start/Stopp-Funktion im Schaltgetriebe eingelegt wird. Die Zulässigkeit eines Gangs kann je nach Ausgestaltung an verschiedene Kriterien gekoppelt sein. Zum Beispiel können nur bestimmte Gänge als Anfahrgänge zugelassen werden. Ebenso können der Betriebszustand des Fahrzeugs bzw. Umwelteinflüsse als Kriterien einfließen. Beispielsweise kann bei einem Wiederanfahren am Berg nur ein vorbestimmter kleiner Anfahrgang zugelassen werden.

Das erfindungsgemäße Verfahren kommt insbesondere in einem Antriebsstrang zum Einsatz, bei dem die Verbindung zwischen elektrischer Maschine und Schaltgetriebe bei über die Start/Stopp-Funktion abgeschaltetem Verbrennungsmotor nicht unterbrochen ist und der Verbrennungsmotor nach Beendigung der Start/Stopp-Funktion über die elektrische Maschine gestartet wird. In diesem Fall ist es zwangsläufig erforderlich, dass bei Abschaltung des Verbrennungsmotors mittels der Start/Stopp-Funktion der Gang im Schaltgetriebe ausgelegt wird, da ansonsten das Fahrzeug bei Anlassen des Verbrennungsmotors über die elektrische Maschine anfährt.

In einer besonders bevorzugten Ausführungsform des erfindungsgemäßen Verfahrens wird der eingelegte Gang des Schaltgetriebes bei Stillstand des Fahrzeugs (d.h. der zuletzt vor Stillstand des Fahrzeugs eingelegte Gang) gespeichert. Dieser Gang wird nach Beendigung der Start/Stopp-Funktion eingelegt, sofern kein zukünftiger Gang über die Benutzerschnittstelle während des Stillstands des Fahrzeugs angewählt wird. Auf diese Weise wird ein für den Fahrer plausibler Gang beim Wiederanfahren des Fahrzeugs verwendet.

Alternativ oder zusätzlich besteht auch die Möglichkeit, dass der zukünftige Gang des Schaltgetriebes ein voreingestellter Anfahrgang ist, der nach Beendigung der Start/Stopp-Funktion eingelegt wird, sofern kein zukünftiger Gang über die Benutzerschnittstelle während des Stillstands des Fahrzeugs angewählt wird. Dieser Anfahrgang kann gegebenenfalls in Abhängigkeit von dem Betriebszustand des Fahrzeugs variieren. Ist das Fahrzeug beispielsweise schwer beladen oder befindet es sich bei Stillstand an einer Steigung, wird gegebenenfalls ein niedrigerer Gang als in einer anderen Situation eingelegt.

In einer weiteren Ausführungsform wird als Benutzerschnittstelle ein Gangwahlhebel überwacht, durch dessen Betätigung bei über die Start/Stopp-Funktion abgeschaltetem Verbrennungsmotor der zukünftige Gang des Schaltgetriebes durch den Fahrer anwählbar ist. Der Gangwahlhebel kann dabei ein in herkömmlichen Fahrzeugen verbauter Gangwahlhebel sein, der bei normaler Fahrt zur Gangwahl genutzt wird. In diesem Fall muss keine separate Benutzerschnittstelle zur Anwahl des Gangs bei aktivierter Start/Stopp-Funktion vorgesehen werden.

In einer besonders bevorzugen Ausführungsform wird dem Fahrer der zukünftige Gang des Schaltgetriebes, der beim Wiederanfahren des Fahrzeugs nach Beendigung der Start/Stopp-Funktion eingelegt wird, signalisiert. Das heißt, dem Fahrer wird bei über die Start/Stopp-Funktion abgeschaltetem Verbrennungsmotor der zum Wiederanfahren verwendete Gang vermittelt, obwohl dieser noch nicht im Getriebe eingelegt ist. Hierdurch wird ihm eine hilfreiche Information über die spätere Weiterfahrt gegeben.

Die Signalisierung des zukünftigen Gangs des Schaltgetriebes kann auf verschiedene Weise erfolgen. In einer Variante der Erfindung wird der zukünftige Gang des Schaltgetriebes dem Fahrer optisch signalisiert, insbesondere über ein Display im Fahrzeug, wie z.B. ein Display im Fahrzeugcockpit oder ein Head-up-Display. Dabei wird die entsprechende Gangnummer bzw. das entsprechende Gangsymbol des zukünftigen Gangs wiedergegeben. Zusätzlich oder alternativ besteht auch die Möglichkeit, dass der zukünftige Gang des Schaltgetriebes dem Fahrer akustisch und/oder haptisch signalisiert wird.

Neben dem oben beschriebenen Verfahren betrifft die Erfindung ferner eine Vorrichtung zum Betreiben eines Antriebsstrangs eines Fahrzeugs mit Parallel-Hybrid-Antrieb. Der Antriebsstrang umfasst ein Antriebsaggregat mit einem Verbrennungsmotor und einer elektrischen Maschine, eine zwischen Verbrennungsmotor und elektrischer Maschine geschaltete Kupplung sowie ein automatisches Schaltgetriebe, welches zwischen dem Antriebsaggregat und einem Abtrieb angeordnet ist. In der Vorrichtung ist eine Steuereinrichtung vorgesehen, die eine Start/Stopp-Funktion bereitstellt, durch welche bei Vorliegen einer oder mehrerer vorbestimmter Bedingungen der Verbrennungsmotor bei Stillstand des Fahrzeugs abgeschaltet wird und ein eingelegter Gang im Schaltgetriebe ausgelegt wird. Die Steuereinrichtung zeichnet sich dadurch aus, dass sie bei über die Start/Stopp-Funktion abgeschaltetem Verbrennungsmotor eine Benutzerschnittstelle überwacht, über welche der Fahrer des Fahrzeugs einen zukünftigen Gang des Schaltgetriebes anwählen kann, wobei die Steuereinrichtung bewirkt, dass ein über die Benutzerschnittstelle angewählter Gang nach Beendigung der Start/Stopp-Funktion im Schaltgetriebe eingelegt wird.

Die erfindungsgemäße Vorrichtung ist vorzugsweise derart ausgestaltet, dass eine oder mehrere der oben beschriebenen Varianten des erfindungsgemäßen Verfahrens mit der Vorrichtung durchführbar sind.

Die Erfindung betrifft darüber hinaus ein Fahrzeug und insbesondere ein Kraftfahrzeug, vorzugsweise ein Nutzfahrzeug, welches die oben beschriebene erfindungsgemäße Vorrichtung beinhaltet.

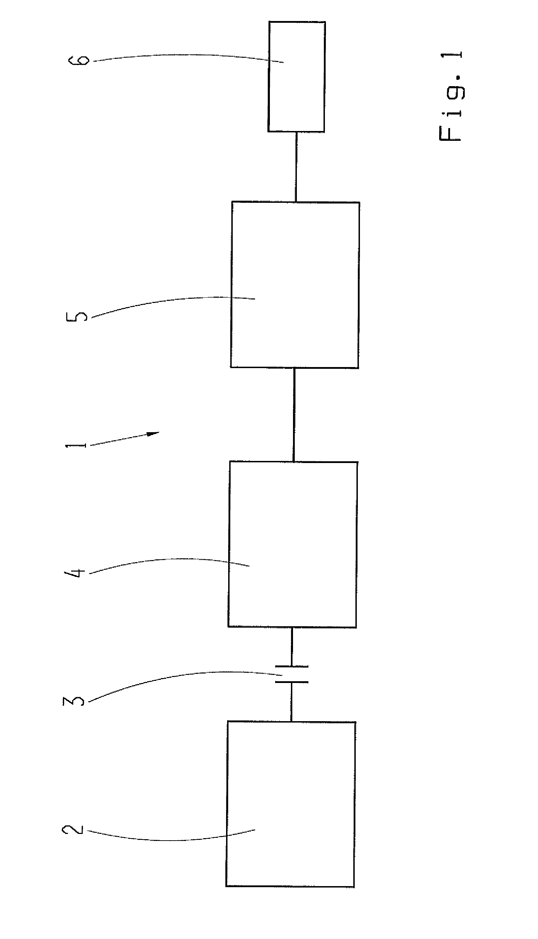

Ein Ausführungsbeispiel der Erfindung wird nachfolgend anhand der beigefügten Fig. 1 detailliert beschrieben. Diese Figur zeigt in schematischer Darstellung den Antriebsstrang eines Parallel-Hybrid-Antriebs, der mit einer Ausführungsform des erfindungsgemäßen Verfahrens betrieben wird.

Fig. 1 zeigt exemplarisch ein Antriebsstrangschema eines Kraftfahrzeugs, dessen Antriebsstrang 1 mit einer Variante des erfindungsgemäßen Verfahrens betrieben wird. Das Kraftfahrzeug ist dabei vorzugsweise ein Nutzfahrzeug, wie z.B. ein LKW oder ein Fahrzeug zur Personenbeförderung. Das erfindungsgemäße Verfahren kann jedoch auch in beliebigen anderen Fahrzeugen zum Einsatz kommen. Der dargestellte Antriebsstrang umfasst einen Verbrennungsmotor 2, der über eine Kupplung 3 mit einer elektrischen Maschine 4 verbunden ist. Hierdurch wird ein Antriebsaggregat gebildet, mit dem ein Antriebsmoment auf dem Antriebsstrang erzeugt wird. Die elektrische Maschine ist dabei mit einem (nicht gezeigten) elektrischen Energiespeicher verbunden, über den die Maschine als Elektromotor zum Antrieb des Antriebsstrangs genutzt werden kann. Die Maschine kann jedoch auch im generatorischen Betrieb Energie aus dem Antriebsstrang entnehmen, um diese zur Ladung des Energiespeichers zu nutzen. Das über das Antriebsaggregat erzeugte Antriebsmoment wird über ein automatisches Schaltgetriebe 5 an ein Achsgetriebe 6 und damit ein Abtrieb gegeben, um hierdurch das Fahrzeug fortzubewegen. Das Getriebe kann z.B. ein Synchrongetriebe, ein Klauengetriebe oder eine Mischform solcher Getriebe sein. Der Antriebsstrang der Fig. 1 stellt einen sog. Parallel-Hybrid-Antrieb dar, der sich dadurch auszeichnet, dass Verbrennungsmotor 2 und elektrische Maschine 4 gemeinsam auf den Antriebsstrang wirken können, wobei zur Abkopplung des Verbrennungsmotors vom Antriebsstrang die Kupplung 3 vorgesehen ist. Demgegenüber ist in der Ausführungsform der Fig. 1 zwischen elektrischer Maschine 4 und Getriebe 5 keine Kupplung vorgesehen, denn die Kraftübertragung der elektrischen Maschine kann elektrisch gesteuert werden.

Wie bereits oben erwähnt, verfügt der Antriebsstrang der Fig. 1 über ein automatisches Schaltgetriebe 5, dessen Schaltvorgänge in geeigneter Weise durch eine elektronische Steuereinrichtung gesteuert werden. Die Steuereinrichtung sendet dabei Befehle an entsprechende Aktuatoren, welche die Gänge des Getriebes sowie die Kupplung 3 und eventuell weitere Elemente betätigen. Die Aktuatoren werden in der Regel elektrisch, hydraulisch oder pneumatisch angetrieben. Gegebenenfalls kommen auch Kombinationen aus elektrischen und pneumatischen bzw. elektrischen und hydraulischen Aktuatoren zum Einsatz. Für Nutzfahrzeuge werden in der Regel pneumatische oder elektrisch-pneumatische Schaltsysteme verwendet. Während der Fortbewegung des Fahrzeugs wird der aktuell im Schaltgetriebe eingelegte Gang dem Fahrer des Fahrzeugs auf einem Display im Armaturenbrett angezeigt.

Der in Fig. 1 dargestellte Parallel-Hybrid-Antrieb verfügt ferner über eine an sich bekannte Start/Stopp-Funktion, die über eine elektronische Steuerung implementiert ist. Gemäß dieser Funktion wird bei Stillstand des Kraftfahrzeugs sowie bei Vorliegen unbestimmter Bedingungen der Verbrennungsmotor 2 abgeschaltet. Die vorbestimmten Bedingungen berücksichtigen dabei den aktuellen Betriebszustand des Fahrzeugs sowie gegebenenfalls Umwelteinflüsse (z.B. Außentemperatur), um sicherzustellen, dass das Abschalten des Verbrennungsmotors nicht zu einer zu starken Entladung der Batterie des Bordnetzes führt. Nach Abschalten des Verbrennungsmotors durch die Start/Stopp-Funktion wird der Verbrennungsmotor durch Öffnen der Kupplung 3 vom Antriebsstrang 1 getrennt. Die Start/Stopp-Funktionalität bewirkt ein Wiederanlassen des Verbrennungsmotors, sobald detektiert wird, dass der Fahrer seine Fahrt nach Stillstand fortsetzen möchte. Diese Detektion kann z.B. über das Lösen des Bremspedals bzw. die Betätigung des Gaspedals erfolgen. In der Ausführungsform der Fig. 1 wird das Anlassen des Verbrennungsmotors über die elektrische Maschine 4 des Hybridantriebs bewirkt. Hierzu wird die Kupplung 3 zwischen Verbrennungsmotor 2 und elektrischer Maschine 4 wieder geschlossen. Um das Anlassen zu ermöglichen, wird beim Abschalten des Verbrennungsmotors das automatische Getriebe 5 auf Neutral gestellt, d.h. der Gang im Getriebe wird ausgelegt. Ohne diese Funktion würde beim Anlassen des Verbrennungsmotors das Drehmoment der elektrischen Maschine auch auf den Abtrieb 6 übertragen werden.

In herkömmlichen Fahrzeugen mit Parallel-Hybrid-Antrieb hat der Fahrer keine Möglichkeit, auf den Getriebezustand Einfluss zu nehmen, wenn der Verbrennungsmotor im Rahmen der Start/Stopp-Funktion abgeschaltet wurde. Das heißt, der Fahrer muss bis zur Beendigung der Start/Stopp-Funktion warten, bis er den von ihm gewünschten Gang anwählen kann, obwohl er bereits vorher weiß, in welchem Gang er anfahren möchte. Dies führt zu Komforteinschränkungen und zu Verzögerungen beim Wiederanfahren. Zur Behebung dieses Nachteils werden in der Ausführungsform der Fig. 1 auch während der Abschaltung des Motors im Rahmen der Start/Stopp-Funktionalität Eingaben an dem Gangwahlhebel überwacht, der herkömmlicherweise bei laufendem Motor zur Spezifikation des Gangs verwendet wird. Dabei wird dem Fahrer auch bei abgeschaltetem Motor die Möglichkeit gegeben, einen Gang festzulegen, der jedoch erst beim Anfahren des Fahrzeugs bei Beendigung der Start/Stopp-Funktion eingelegt wird. Dieser über den Gangwahlhebel spezifizierte Gang wird dann auf dem Display angezeigt, auf dem ansonsten der aktuell eingelegte Getriebegang wiedergegeben wird. Somit wird dem Fahrer suggeriert, dass er auch bei abgeschaltetem Motor einen von ihm gewünschten Gang einlegen kann, obwohl das Einlegen des Gangs erst beim Anfahren erfolgt.

In der hier beschriebenen Ausführungsform der Erfindung wird auch im Falle, dass der Fahrer über den Gangwahlhebel keinen Gang auswählt, nicht der tatsächliche Getriebezustand (d.h. die Neutral-Stellung) auf dem Display angezeigt. Vielmehr wird ein voreingestellter Anfahrgang wiedergegeben, der nach Beendigung der Start/Stopp-Funktion zum Wiederanfahren verwendet wird. Der Anfahrgang kann dabei fest vorgegeben sein oder ggf. auch basierend auf dem Betriebszustand des Fahrzeugs variieren. Ist das Fahrzeug z.B. schwer beladen bzw. ist das Fahrzeug an einer Steigung stehen geblieben, kann ein kleinerer Anfahrgang als in anderen Situationen gewählt werden. Gegebenenfalls besteht auch die Möglichkeit, dass als Gang zum Anfahren der vor dem Stillstand des Fahrzeugs eingelegte Gang verwendet wird. Dieser Gang wird gedanklich vom Fahrer als der eingelegte Gang angesehen, so dass ein für ihn plausibler Gang zum Anfahren genutzt wird. Sobald der Fahrer den voreingestellten Anfahrgang über den Gangwahlhebel verändert, wird die Anzeige im Display entsprechend aktualisiert und der angewählte Gang dann zum Anfahren eingesetzt. Auf diese Weise hat der Fahrer immer die aktuelle Information über den zukünftigen Anfahrgang.

Um in der Ausführungsform der Fig. 1 zu erreichen, dass der beim Anfahren zu verwendende Gang auf dem Display im Fahrzeug angezeigt wird, ist ein (nicht gezeigtes) Merkermodul in der Software der Steuereinrichtung des Hybridantriebs vorgesehen. Dabei wird der Gang, mit dem das Fahrzeug zum Stillstand gekommen ist, in dem Merkermodul zwischengespeichert, sofern dieser Gang beim Wiederanfahren verwendet werden soll. Soll ein anderer Gang zum Wiederanfahren verwendet werden bzw. wird der Gang durch den Fahrer verändert, wird dieser Gang in das Merkermodul geschrieben bzw. das Merkermodul mit diesem Gang überschrieben. Der Gang aus dem Merkermodul wird dann über eine entsprechende Signalisierung an das Display gegeben, das diesen Gang über alphanumerische Zeichen wiedergibt. Ist in dem Fahrzeug mit CAN-Bus gemäß dem Netzwerkprotokoll SAE-J1939 verbaut, wird herkömmlicherweise das SAE-Signal "Transmission Current Gear" (SPN 523) an das Display gegeben, so dass immer der aktuell eingelegte Gang und damit die Neutral-Stellung bei über die Start/Stopp-Funktion abgeschaltetem Motor angezeigt wird. In einer Variante der Erfindung wird nunmehr anstatt dem SAE-Signal (SPN 523) das SAE-Signal "Transmission Requested Gear Feedback" (SPN 3289) verwendet. Auf dieses Signal wird der Gang aus dem Merkmodul geschrieben und dieses Signal wird von dem Display eingelesen und zur Anzeige gebracht.

Das erfindungsgemäße Verfahren weist eine Reihe von Vorteilen auf. Insbesondere wird in einem Fahrzeug mit Parallel-Hybrid-Antrieb und automatischem Schaltgetriebe die Start/Stopp-Funktion dahingehend verbessert, dass der Fahrer die Möglichkeit hat, den nach Beendigung der Start/Stopp-Funktion zu verwendenden zukünftigen Gang auszuwählen bzw. zu verändern. In einer besonders bevorzugten Ausführungsform wird dem Fahrer der zukünftige Gang dabei auf einem Display angezeigt. Dem Fahrer wird somit die für ihn wichtige Information vermittelt, mit welchem Gang er später anfährt. Die Anzeige des zukünftigen Anfahrgangs kann in einfacher in bereits bestehende Kommunikations-Infrastrukturen im Fahrzeug integriert werden, z.B. indem bereits bekannte Signale mit dem zukünftig einzulegenden Getriebegang belegt werden und zur Spezifikation der optischen Darstellung für das Display verwendet werden. Anstatt oder zusätzlich zu einer optischen Wiedergabe des zukünftigen Gangs sind auch andere Signalisierungen für den Gang denkbar, z.B. eine akustische oder haptische Signalisierung oder Kombinationen davon. Die haptische Signalisierung kann z.B. über das Lenkrad bzw. den Gangwahlhebel im Fahrzeug stattfinden.

### Bezugszeichen

- 1: Antriebsstrang
- 2: Verbrennungsmotor
- 3: Kupplung
- 4: elektrische Maschine
- 5: automatisches Schaltgetriebe
- 6: Abtrieb

## Patentansprüche

1. Verfahren zum Betreiben eines Antriebsstrangs eines Fahrzeugs mit Parallel-Hybrid-Antrieb, wobei der Antriebsstrang ein Antriebsaggregat mit einem Verbrennungsmotor (2) und einer elektrischen Maschine (4), eine zwischen Verbrennungsmotor (2) und elektrischer Maschine (4) geschaltete Kupplung (3) sowie ein automatisches Schaltgetriebe (5) umfasst, welches zwischen dem Antriebsaggregat und einem Abtrieb (6) angeordnet ist, wobei eine Start/Stopp-Funktion vorgesehen ist, durch welche bei Vorliegen einer oder mehrerer vorbestimmter Bedingungen der Verbrennungsmotor (2) bei Stillstand des Fahrzeugs abgeschaltet und ein eingelegter Gang im Schaltgetriebe (5) ausgelegt wird, **dadurch gekennzeichnet, dass** bei über die Start/Stopp-Funktion abgeschaltetem Verbrennungsmotor (2) eine Benutzerschnittstelle überwacht wird, über welche der Fahrer des Fahrzeugs einen zukünftigen Gang des Schaltgetriebes (5) anwählen kann, wobei ein über die Benutzerschnittstelle angewählter Gang nach Beendigung der Start/Stopp-Funktion im Schaltgetriebe eingelegt wird.

2. Verfahren nach Anspruch 1, **dadurch gekennzeichnet, dass** der eingelegte Gang des Schaltgetriebes (5) bei Stillstand des Fahrzeugs gespeichert wird und dieser Gang nach Beendigung der Start/Stopp-Funktion eingelegt wird, sofern kein zukünftiger Gang über die Benutzerschnittstelle angewählt wird.

3. Verfahren nach Anspruch 1 oder 2, **dadurch gekennzeichnet, dass** der zukünftige Gang des Schaltgetriebes (5) ein voreingestellter Anfahrgang ist, der nach Beendigung der Start/Stopp-Funktion eingelegt wird, sofern kein zukünftiger Gang über die Benutzerschnittstelle angewählt wird.

4. Verfahren nach Anspruch 3, **dadurch gekennzeichnet, dass** der voreingestellte Anfahrgang des Schaltgetriebes (5) in Abhängigkeit vom Betriebszustand des Fahrzeugs festgelegt wird.

5. Verfahren nach einem der vorhergehenden Ansprüche, **dadurch gekennzeichnet, dass** als Benutzerschnittstelle ein Gangwahlhebel überwacht wird, durch dessen Betätigung bei über die Start/Stopp-Funktion abgeschaltetem Verbrennungsmotor (2) der zukünftige Gang des Schaltgetriebes (5) durch den Fahrer anwählbar ist.

6. Verfahren nach einem der vorhergehenden Ansprüche, **dadurch gekennzeichnet, dass** dem Fahrer der zukünftige Gang des Schaltgetriebes (5), der beim Wiederanfahren des Fahrzeugs nach Beendigung der Start/Stopp-Funktion eingelegt wird, signalisiert wird.

7. Verfahren nach einem der vorhergehenden Ansprüche, **dadurch gekennzeichnet, dass** der zukünftige Gang des Schaltgetriebes (5) dem Fahrer optisch, insbesondere über ein Display im Fahrzeug, und/ oder akustisch und/oder haptisch signalisiert wird.

8. Vorrichtung zum Betreiben eines Antriebsstrangs eines Fahrzeugs mit Parallel-Hybrid-Antrieb, wobei der Antriebsstrang ein Antriebsaggregat mit einem Verbrennungsmotor (2) und einer elektrischen Maschine (4), eine zwischen Verbrennungsmotor (2) und elektrischer Maschine (4) geschaltete Kupplung (3) sowie ein automatisches Schaltgetriebe (5) umfasst, welches zwischen dem Antriebsaggregat und einem Abtrieb (6) angeordnet ist, wobei die eine Steuereinrichtung vorgesehen ist, die eine Start/Stopp-Funktion bereitstellt, durch welche bei Vorliegen einer oder mehrerer vorbestimmter Bedingungen der Verbrennungsmotor (2) bei Stillstand des Fahrzeugs abgeschaltet wird und ein eingelegter Gang im Schaltgetriebe (5) ausgelegt wird, **dadurch gekennzeichnet, dass** die Steuereinrichtung derart ausgestaltet ist, dass sie bei über die Start/Stopp-Funktion abgeschaltetem Verbrennungsmotor (2) eine Benutzerschnittstelle überwacht, über welche der Fahrer des Fahrzeugs einen zukünftigen Gang des Schaltgetriebes (5) anwählen kann, wobei die Steuereinrichtung bewirkt, dass ein über die Benutzerschnittstelle angewählter Gang nach Beendigung der Start/Stopp-Funktion im Schaltgetriebe (5) eingelegt wird.

9. Vorrichtung nach Anspruch 8, **dadurch gekennzeichnet, dass** die Vorrichtung zur Durchführung eines Verfahrens nach einem der Ansprüche 2 bis 7 ausgestaltet ist.

10. Fahrzeug, insbesondere Kraftfahrzeug, **dadurch gekennzeichnet**, das das Fahrzeug eine Vorrichtung nach Anspruch 8 oder 9 umfasst.
